# EUROPÄISCHE PATENTSCHRIFT

(11) **EP 0 831 239 B1**
(45) Veröffentlichungstag und Bekanntmachung des Hinweises auf die Patenterteilung: **28.02.2001**
(21) Anmeldenummer: 97114448.0
(22) Anmeldetag: 21.08.1997
(51) Int. Cl.: F16B 25/10

(54) **Schneidschraube**
Cutting screw
Vis perceuse

(30) Priorität: 24.09.1996 DE 19639135
(43) Veröffentlichungstag der Anmeldung: 25.03.1998
(73) Patentinhaber: fischerwerke Artur Fischer GmbH & Co. KG, 72178 Waldachtal (DE)
(72) Erfinder: Schulte, Helmut, 58507 Lüdenscheid (DE)

(56) Entgegenhaltungen:
- EP-A- 0 425 358
- WO-A-94/15105
- DE-A- 2 256 957

## Beschreibung

Die Erfindung betrifft eine Schneidschraube gemäß dem Oberbegriff des Anspruchs 1.

Aus der DE-OS 28 15 247 ist eine gattungsgemäße Schneidschraube zur Verankerung in Bauwerkstoffen bekannt, die als Montageschraube zur Befestigung von Holzlatten, Metallprofilen, Lochbänder, Leisten, Abhängedrähten und dergleichen verwendet wird. Die Vorbohrung im Bauwerkstoff soll vor allem aus statischen Gründen einen möglichst geringen Durchmesser haben, darf jedoch nicht kleiner sein als der Kerndurchmesser der Schneidschraube. Bei der bekannten Schneidschraube sind längs einer axialen Linie aus den Gewindegängen gleichbleibende Fräsprofile ausgeschnitten, die das Einschneiden des Gewindes in den Bauwerkstoff erleichtern. Das Schneiden bzw. Fräsen des Gegengewindes durch die bekannte Schneidschraube ist jedoch unbefriedigend, weil alle Gewindegänge ein Fräsprofil aufweisen, sodass jeder neu eingreifende Gewindegang bis zum Kopfende das Gegengewinde neu bearbeitet. Darüber hinaus wird auch die Tragfähigkeit des Gewindes der Schneidschraube durch die Unterbrechungen im Gewindegang reduziert.

Bekannt sind ferner selbstschneidende Schrauben zum Einschießen in Blech, die einen vor dem Gewinde angeordneten Bohrkopf mit Schneiden aufweisen, um im Blech ein Kernloch zu erzeugen. Bei diesen Schrauben kommt nur ein Gewindegang in Eingriff, sodass deren Anwendungsbereich auf Bleche beschränkt ist. (DE-A-2256957)

Für die Verwendung in Platten, insbesondere Gipskartonplatten ist aus der EP-A-0425358 eine Schraube mit großflächigem Gewinde und einem Fräskopf bekannt, mit dem beim Eindrehen der Schrauben das Kernloch vorgebohrt wird. Aufgrund des großflächigen Gewindes ohne Fräsprofile ist die bekannte Schraube nur für den Einsatz in weichen Baustoffen geeignet, bei denen die Ausformung des Gegengewindes nur durch Verdrängen des Materials möglich ist.

Der Erfindung liegt die Aufgabe zu Grunde, eine Schneidschraube für die Befestigung von Gegenständen an dickwandigen Bauwerkstoffen zu schaffen, mit der ein tragfähiges Gegengewinde erstellt und damit eine hohe Auszugskraft erreicht werden kann.

Diese Aufgabe wird nach der Erfindung dadurch gelöst, dass die Fräsprofile mit zunehmendem Abstand von dem Fuß kleiner werden und einige Gewindegänge am Kopfende des Gewindeschaftes von Fräsprofilen frei sind.

Durch die größeren Fräsprofile im Bereich des Schraubenfußes wird der Gewindeanschnitt durch Reduzierung des Drehmoments erleichtert. Mit der Verkleinerung der Fräsprofile in Richtung Kopfende und einigen Gewindegängen ohne Fräsprofile steht bei diesen Gewindegängen der volle Umfang zur Lastaufnahme zur Verfügung. Da bei diesen vollen Gewindegängen auch kein Materialabtrag mehr stattfindet, ergibt sich auch ein tragfähiges Gegengewinde im Bauwerkstoff.

Eine besonders gute Fräswirkung oder Schneidwirkung wird dadurch erzielt, dass die Fräsprofile bis zum Fuß des Gewindeschaftes angeordnet sind und somit eine sichere Gewindeformung bewirken.

Vorteilhafte Fräsprofile sind als Kreissegmentausschnitte, als Rechtkantstege, als Dreieckstege oder als Zahnstege ausgebildet.

Ausführungsbeispiele der Erfindung werden anhand der Zeichnung erläutert, in der darstellen:
Fig. 1 ein erstes Ausführungsbeispiel in der Ansicht,
Fig. 2 einen Schnitt nach der Linie II-II in Fig. 1,
Fig. 3 ein zweites Ausführungsbeispiel in der Ansicht,
Fig. 4 einen Schnitt nach der Linie IV-IV in Fig. 3
' Fig. 5 ein drittes Ausführungsbeispiel in der Ansicht,
Fig. 6 einen Schnitt nach der Linie VI-VI in Fig. 5,
Fig. 7 ein viertes Ausführungsbeispiel in der Ansicht und
Fig. 8 einen Schnitt nach der Linie VIII-VIII in Fig. 7

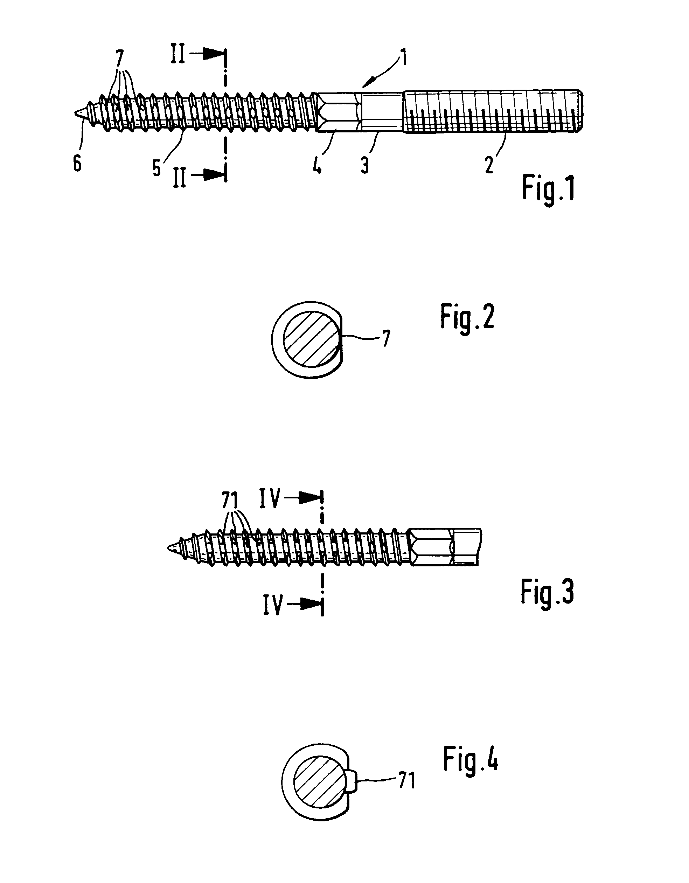

Die Fig. 1 und 2 zeigen eine als Schneidschraube ausgebildete Montageschraube 1. Der Schaft weist vom Kopfende aus ein erstes Gewinde 2, gegebenenfalls einen gewindefreien Abschnitt 3, ein Betätigungsprofil 4 und ein Holzschraubengewinde 5 auf. Anstelle des Betätigungsprofils 4 kann auch am Kopf ein Betätigungsprofil in Form eines Sechskantkopfes, eines Imbusprofils oder dergleichen vorgesehen sein. Das Holzschraubengewinde 5 läuft am Fuß des Gewindeschaftes 1 in eine Spitze 6 aus.

Längs einer im Wesentlichen über die gesamte Länge des Holzschraubengewindes 5 verlaufenden axialen Linie sind aus den Gewindegängen Fräsprofile 7 ausgeschnitten. Die Fräsprofile 7 sind als Kreissegmentausschnitte ausgebildet. Die Fräsprofile 7 reichen bis in die Spitze 6 des Gewindefußes hinein und werden mit zunehmendem Abstand vom Fuß kleiner. Ein oder mehrere Gewindegänge am Kopfende des Gewindeschaftes sind von Fräsprofilen frei. Dadurch ist sichergestellt, dass die kopfseitigen Gewindegänge über den vollen Umfang tragen. Beim Einschrauben der Schneidschraube kommen die Fräsprofile von der Spitze ausgehend sogleich in Eingriff mit den Wänden der Vorbohrung, sodass eine gute Gewindeformung des Gegengewindes erzielt wird.

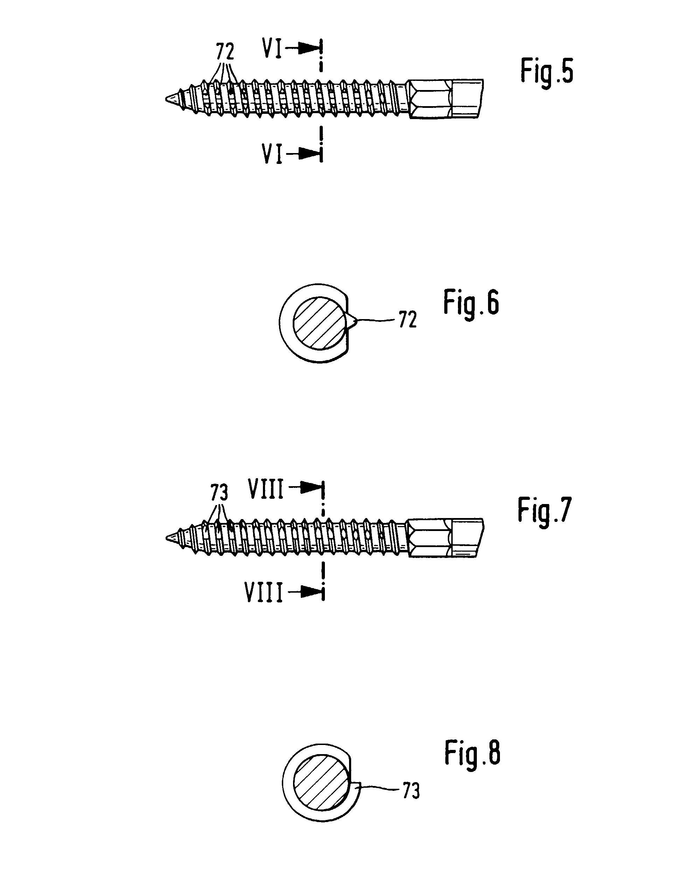

Die Fig. 3 und 4 zeigen Fräsprofile 71 in Form von Rechteckstegen. Die Fig. 5 und 6 zeigen Fräsprofile 72 in Form von Dreieckstegen. Die Fig. 7 und 8 zeigen Fräsprofile 73 in Form von Zahnstegen jeweils mit einer Zahnkante als Schneidkante.

## Patentansprüche

1. Schneidschraube zur Verankerung in dickwandigen Bauwerkstoffen mit einem Gewindeschaft und einem Holzschraubengewinde (5), aus dessen Gewindegängen längs einer axialen Linie Fräsprofile (7, 71, 72, 73) ausgeschnitten sind, **dadurch gekennzeichnet**, dass die Fräsprofile (7, 71, 72, 73) mit zunehmendem Abstand vom Fuß der Schneidschraube kleiner werden und einige Gewindegänge am Kopfende des Gewindeschaftes von Fräsprofilen frei sind.

2. Schneidschraube nach Anspruch 1, **dadurch gekennzeichnet,** dass die Fräsprofile (7, 71, 72, 73) bis zum Fuß des Gewindeschaftes angeordnet sind.

3. Schneidschraube nach Anspruch 1, **dadurch gekennzeichnet,** dass die Fräsprofile als Kreissegmentausschnitte (7) ausgebildet sind.

4. Schneidschraube nach Anspruch 1, **dadurch gekennzeichnet**, dass die Fräsprofile als Rechtkantstege (71) ausgebildet sind.

5. Schneidschraube nach Anspruch 1, **dadurch gekennzeichnet,** dass die Fräsprofile als Dreieckstege (72) ausgebildet sind.

6. Schneidschraube nach Anspruch 1, **dadurch gekennzeichnet**, dass die Fräsprofile als Zahnstege (73) ausgebildet sind.

## Claims

1. Self-tapping screw for anchoring in thick-walled construction materials, having a thread shaft and a wood screw thread (5), from the thread turns of which there are cut out milling profiles (7, 71, 72, 73) along an axial line, characterized in that the milling profiles (7, 71, 72, 73) become smaller the further away they are from the leading end of the self-tapping screw, and some thread turns at the head end of the thread shaft are free of milling profiles.

2. Self-tapping screw according to claim 1, characterized in that the milling profiles (7, 71, 72, 73) are arranged as far as the leading end of the thread shaft.

3. Self-tapping screw according to claim 1, characterized in that the milling profiles are in the form of circle segments (7).

4. Self-tapping screw according to claim 1, characterized in that the milling profiles are in the form of rectangular projections (71).

5. Self-tapping screw according to claim 1, characterized in that the milling profiles are in the form of triangular projections (72).

6. Self-tapping screw according to claim 1, characterized in that the milling profiles are in the form of tooth-like projections (73).

## Revendications

1. Vis perceuse conçue pour l'ancrage dans des matériaux de construction à paroi épaisse, comprenant une tige filetée et un filetage à bois (5) à partir des filets duquel des profils fraisés (7, 71, 72, 73) sont taillés le long d'une ligne axiale, caractérisée par le fait que les profils fraisés (7, 71, 72, 73) rapetissent au fur et à mesure de l'accroissement de distance vis-à-vis de la base de la vis perceuse, et quelques filets sont dépourvus de profils fraisés à l'extrémité frontale de la tige filetée.

2. Vis perceuse selon la revendication 1, caractérisée par le fait que les profils fraisés (7, 71, 72, 73) sont disposés jusqu'à la base de la tige filetée.

3. Vis perceuse selon la revendication 1, caractérisée par le fait que les profils fraisés sont réalisés sous la forme de dépouilles (7) en secteurs circulaires.

4. Vis perceuse selon la revendication 1, caractérisée par le fait que les profils fraisés sont réalisés sous la forme de membrures rectangulaires (71).

5. Vis perceuse selon la revendication 1, caractérisée par le fait que les profils fraisés sont réalisés sous la forme de membrures triangulaires (72).

6. Vis perceuse selon la revendication 1, caractérisée par le fait que les profils fraisés sont réalisés sous la forme de membrures dentées (73).
